Europäisches Patentamt

European Patent Office

Office européen des brevets

(11) Veröffentlichungsnummer: **0 382 017**
**A1**

(19)

## (12) EUROPÄISCHE PATENTANMELDUNG

(21) Anmeldenummer: 90101547.9

(22) Anmeldetag: 26.01.90

(51) Int. Cl.⁵: **B65G 13/12, B65G 13/00, B65G 39/09**

(30) Priorität: 04.02.89 DE 3903371

(43) Veröffentlichungstag der Anmeldung:
16.08.90 Patentblatt 90/33

(84) Benannte Vertragsstaaten:
**AT BE CH DE ES FR GB IT LI NL SE**

(71) Anmelder: **Jenkner, Erwin**
**Lindenstrasse 13**
**D-7261 Gechingen-Bergwald(DE)**

(72) Erfinder: **Jenkner, Erwin**
**Lindenstrasse 13**
**D-7261 Gechingen-Bergwald(DE)**

(74) Vertreter: **Becker, Maria, Dipl.-Phys.**
**Auf dem Haigst 29 Postfach 70 01 47**
**D-7000 Stuttgart 70(DE)**

(54) **Lagerkörper zur Lagerung einer Stützrolle eines Werkstückauflagetisches.**

(57) Zum Buntaufteilen von Werkstückplatten mittels einer Plattenlängs- und einer Plattenquersäge sind diesen miteinander zu verkettende Rollentische zuzuordnen, deren Rollen zueinander und jeweils zur Trennebene der dem jeweiligen Rollentisch zugeordneten Plattensäge parallel gelagert sind.

Zur Werkstückübergabe vom einen auf den anderen Rollentisch ist üblicherweise der zuführende Rollentisch, sobald sich die Werkstücke oberhalb des übernehmenden Rollentisches befinden, so weit abzusenken, dass sich seine Stützrollen unterhalb der Werkstückauflageebene des übernehmenden Rollentisches befinden.

Auf eine solche Höhenverstellung des einen Rollentisches kann verzichtet und eine für beide Rollentische einheitliche Bauhöhe beibehalten werden, sofern die Stützrollen (52) des einen Rollentisches (14) in Lagerkörpern (18) gelagert und mittels eines Stellgliedes (90) in der Höhe entsprechend verstellbar sind. Die Lagerkörper (18) sind hierzu hintereinander in zueinander parallelen Trägerschienen (20) anzuordnen, wobei zur Stützrollenverstellung sämtlicher, in einer der Trägerschienen (20) vorgesehenen Lagerkörper (18) ein gemeinsames Stellglied (90) dient.

Der Einsatz entsprechender Lagerkörper bietet überdies den Vorteil, Rollentische mit Stützrollen ausstatten zu können, deren horizontale Drehachsen abwechselnd einander senkrecht zugeordnet sind. Damit können auf den Rollentisch aufgebrachte plattenförmige Werkstücke in zueinander senkrechten Richtungen transportiert werden.

Fig. 1

EP 0 382 017 A1

# Lagerkörper zur Lagerung einer Stützrolle eines Werkstückauflagetisches

Die Erfindung betrifft einen Lagerkörper zur Lagerung einer Stützrolle zum Abstützen und Transportieren plattenförmiger Werkstücke auf einem Auflagetisch, mit den Merkmalen des Oberbegriffs von Patentanspruch 1.

Lagerkörper dieser Art sind aus der DE-PS 34 00 686 bekannt. Sie bilden einen Bestandteil einer Baugruppe zum Zusammensetzen von Werkstückauflage- oder Rollentischen, die ausser solchen Lagerkörpern noch eine an ihrer Oberseite von einer Längsnut durchzogene Trägerschiene umfasst.

Durch Nebeneinanderanordnen einzelner Trägerschienen ohne zusätzliche Verwendung von jeweils eine Stützrolle aufweisenden Lagerkörpern lassen sich Werkstückauflagetische beliebiger Länge und Breite erstellen, wobei dann in deren Längsnut, anstelle von Stützrollen tragenden Lagerkörpern, jeweils eine über die Trägerschiene vorstehende Auflageleiste einzubringen ist.

Zum Erstellen von Rollentischen sind in die wenigstens eine Längsnut der Trägerschienen jeweils mit einer Stützrolle ausgestattete Lagerkörper abstandsfrei hintereinander einzuschieben, wobei die quer zur Längsnut gelagerten Stützrollen jeweils den gleichen Überstand über die Trägerschienenoberseite haben. Die Stützrollen definieren damit gemeinsam eine horizontale Werkstückauflageebene.

Sollen plattenförmige Werkstücke in zwei zueinander senkrechten Richtungen transportiert werden, so ist unter Verwendung entsprechender Trägerschienen ein weiterer Werkstückauflagetisch als Rollentisch zu erstellen. Dabei sind in den Längsnuten dieser Trägerschienen ebenfalls Lagerkörper abstandsfrei hintereinander anzuordnen, deren Stützrollenachse sich parallel zur Längsnut erstreckt. Die Stützrollen befinden sich dabei an den Lagerkörpern vollständig ausserhalb bzw. oberhalb der betreffenden Trägerschiene. Die Lagerkörper dieses zusätzlichen Rollentisches können auch bereichsweise zwischen den Trägerschienen des zuerst erläuterten Aufbaus eines Werkstücktisches vorgesehen sein.

Diese Tischkonstruktion macht es erforderlich, einen der Rollentische anheb- und absenkbar auszubilden, um zu vermeiden, dass Werkstückplatten bei der Übergabe vom einen auf den anderen Rollentisch zunächst auf die Stützrollen des übernehmenden Rollentisches aufgeschoben und an ihrer Auflagefläche dadurch gegebenenfalls beschädigt werden.

Der Erfindung liegt die Aufgabe zugrunde, einen Lagerkörper in einer Ausbildung gemäss dem Oberbegriff des Patentanspruchs 1 anzugeben, der es ermöglicht, einen Rollentisch in einen Werkstückauflagetisch umzuwandeln, ohne Notwendigkeit, Lagerkörper aus den Längsnuten seiner Trägerschienen entfernen und durch Auflageleisten ersetzen zu müssen; der es ausserdem gestattet, plattenförmige Werkstücke auf dem gleichen Werkstücktisch wahlweise in einer von zwei zueinander senkrechten Richtungen zu verschieben und schliesslich zwei Rollentische für einen derartigen Werkstücktransport hintereinander zu schalten oder bereichsweise ineinander zu verketten, ohne den einen der beiden Rollentische anheb- und absenkbar ausbilden zu müssen.

Diese Aufgabe wird erfindungsgemäss durch die kennzeichnenden Merkmale des Patentanspruchs 1 gelöst.

Die Erfindung ermöglicht es, die Stützrollen von solchen, in einer gemeinsamen Längsnut von Trägerschienen angeordneten Lagerkörpern mittels eines diesen zugeordneten und in der jeweiligen Trägerschiene angeordneten Stellgliedes gemeinsam aus einer oberen Abstützstellung in eine untere Freigabestellung zu bewegen.

Sofern dabei in die Längsnuten an einander benachbarten, einen Rollentisch bildenden Trägerschienen ausschliesslich solche Lagerkörper eingesetzt sind, lässt sich durch Absenken ihrer Stützrollen unter das Tischniveau, in diesem Falle beispielsweise unter die Ebene der Trägerschienenoberseite, der Rollentisch in einen Werkstückauflagetisch umwandeln.

Sind für eine sogenannte Winkelübergabe plattenförmiger Werkstücke zwei Rollentische hintereinanderzuschalten bzw. bereichsweise ineinander anzuordnen, deren Stützrollen um zueinander senkrecht angeordnete Achsen verdrehbar sind, können die Trägerschienen zum Absenken der Stützrollen des einen Rollentisches in einer gemeinsamen Ebene verbleiben. Auf eine besondere Tischhubvorrichtung kann somit verzichtet werden.

Um plattenförmige Werkstücke auf dem gleichen Rollentisch in zueinander senkrechten Richtungen transportieren zu können, sind in die Längsnuten von Trägerschienen im Wechsel oder gruppenweise jeweils Lagerkörper mit anheb-und absenkbarer Stützrolle und solche anzuordnen, deren Stützrolle sich gänzlich oberhalb der Trägerschienenoberseite befindet, und deren Achse sich parallel zur Trägerschienenlängsachse erstreckt.

Die Mechanik zum Anheben und Absenken der Stützrolle am Lagerkörper kann beliebig gestaltet sein.

Eine bevorzugte Ausführungsform ist Gegenstand des Patentanspruchs 2. Das Schwenkglied kann hierbei durch ein Gewinde einer das Stellglied bildenden Spindel entsprechend verstellbar sein. Bevorzugt bildet das Stellglied jedoch eine in der Trägerschiene längsverschiebbar angeordnete Betätigungsstange.

Weitere Merkmale und Einzelheiten der Erfindung sind Gegenstand von Unteransprüchen.

In der Zeichnung ist ein Ausführungsbeispiel eines erfindungsgemässen Lagerkörpers dargestellt. Es zeigen:

Fig. 1 - in schematischer Darstellung eine über zwei Rollentische mit einer Plattenlängssäge verkettete Plattenquersäge

Fig. 2 - eine Draufsicht der Sägenanordnung gemäss Fig. 1

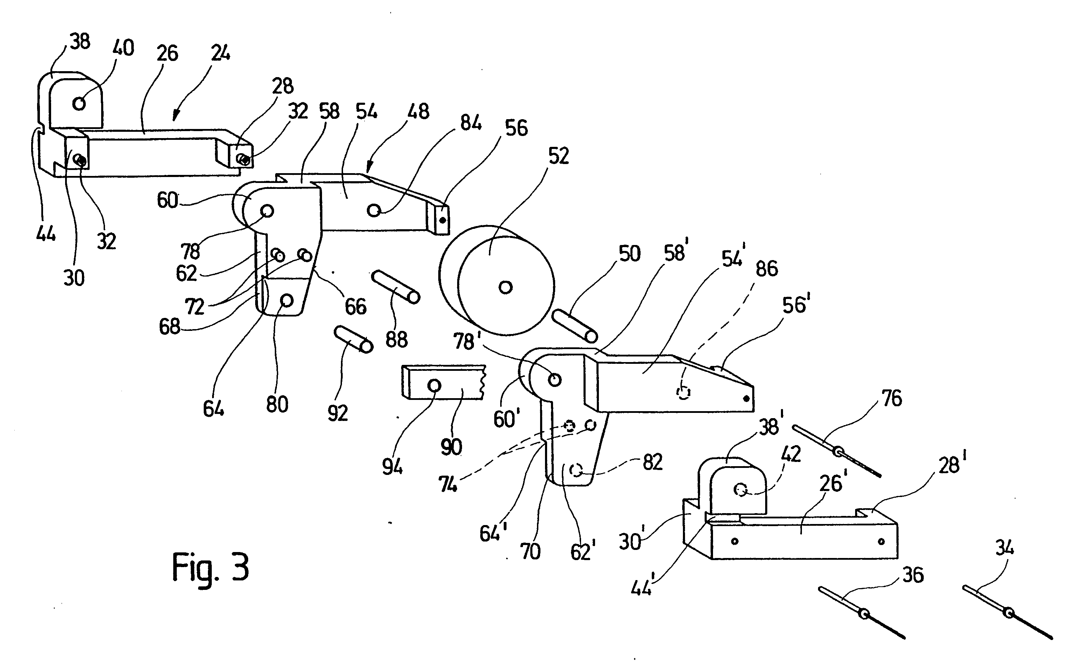

Fig. 3 - eine Explosionszeichnung des Lagerkörpers

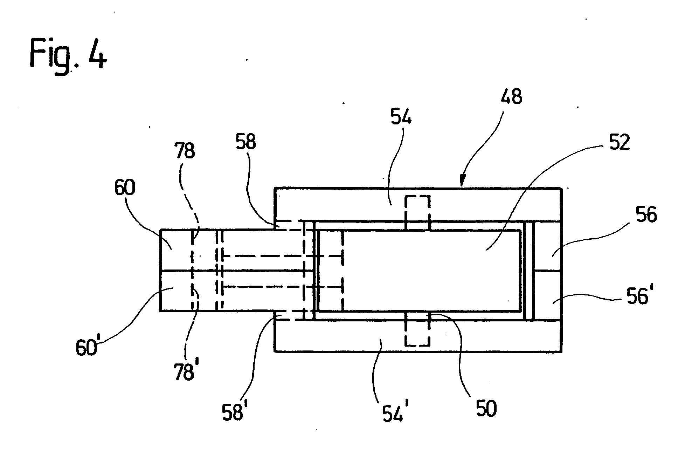

Fig. 4 - eine Draufsicht auf den eine Rolle lagernden Winkelhebel des Lagerkörpers

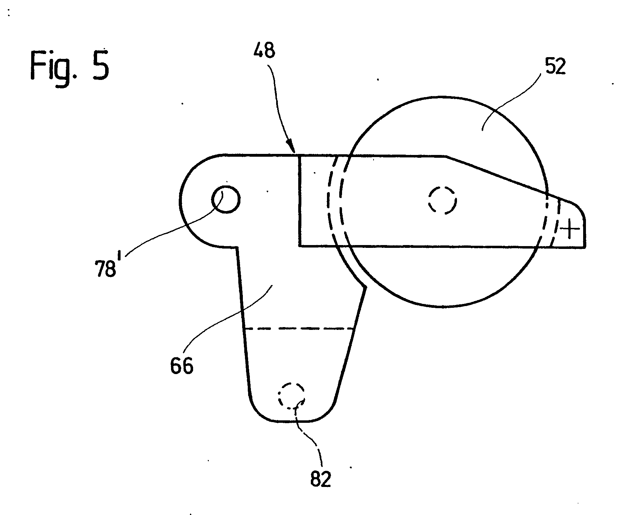

Fig. 5 - eine Seitenansicht des Winkelhebels gemäss Fig. 4

Fig. 6 - eine Draufsicht auf den den Winkelhebel verschwenkbar aufnehmenden Lagerbock des Lagerkörpers

Fig. 7 - eine Seitenansicht des Lagerbockes gemäss Fig. 6

Fig. 8 - eine Stirnansicht des in eine lediglich strichpunktiert angedeutete Trägerschiene eingesetzten Lagerkörpers

Fig. 9 - eine Teilseitenansicht des mit erfindungsgemässen Lagerkörpern ausgestatteten Rollentisches gemäss Fig. 1, in vergrössertem Maßstab

Fig. 10 - eine Darstellung ähnlich Fig. 9, wobei die Rolle der Lagerkörper in ihre abgesenkte Stellung gesteuert ist.

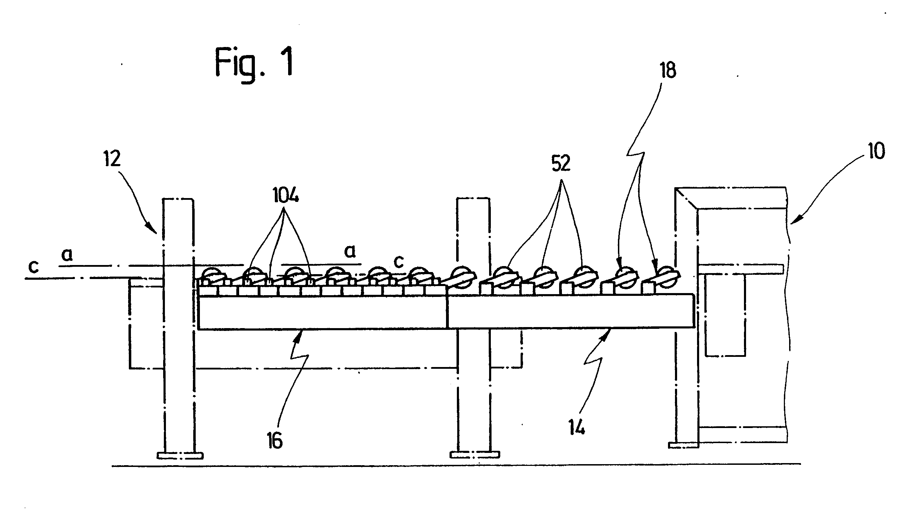

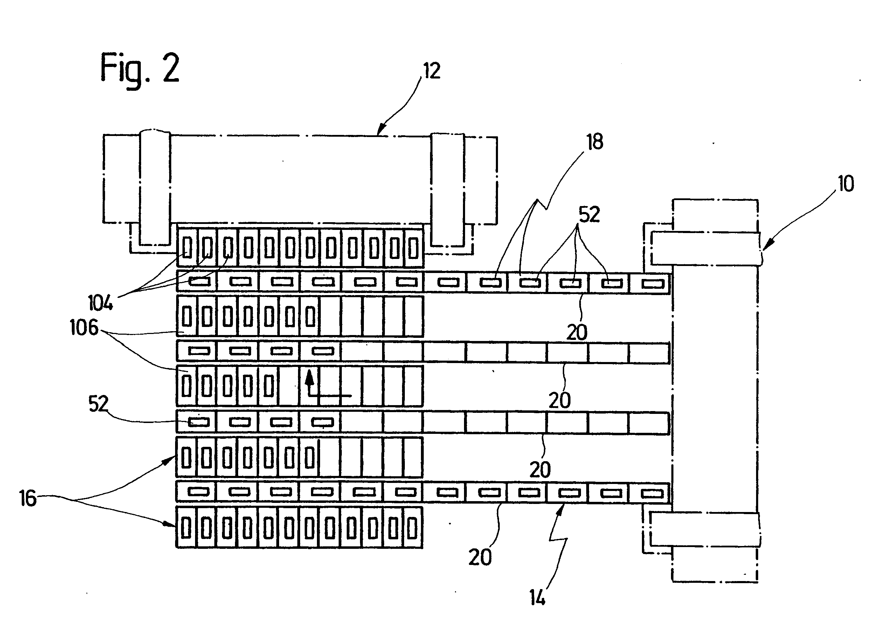

In den Fig. 1 und 2 ist eine Plattenaufteilanlage dargestellt, die durch eine Plattenlängssäge 10, eine Plattenquersäge 12 und zwei Werkstückauflagetische 14 und 16 gebildet ist, durch die ein Winkeltransport von in der Längssäge 10 anfallenden Plattenteilen ermöglicht wird. Beide Rollentische 14 und 16 sind jeweils mit gleichartigen, jedoch von Rollentisch zu Rollentisch konstruktiv unterschiedlich ausgebildeten Lagerkörpern 18 bzw. 20 ausgestattet. Mit Hilfe der Lagerkörper 18 des Werkstückauflagetisches 14 lassen sich an der Abnahmeseite der Plattenlängssäge 10 anfallende Plattenteile parallel zur Trennebene der Plattenquersäge 12 auf deren Werkstückauflagetisch 16 verschieben. Auf dem Werkstückauflagetisch 16 lassen sich die Plattenteile mittels seiner Lagerkörper 20 senkrecht zur Trennebene der Plattenquersäge zum Queraufteilen verschieben. Für den Transport in beiden Vorschubrichtungen dient jeweils eine Vorschubeinrichtung, die der Einfachheit halber nicht darstellt sind.

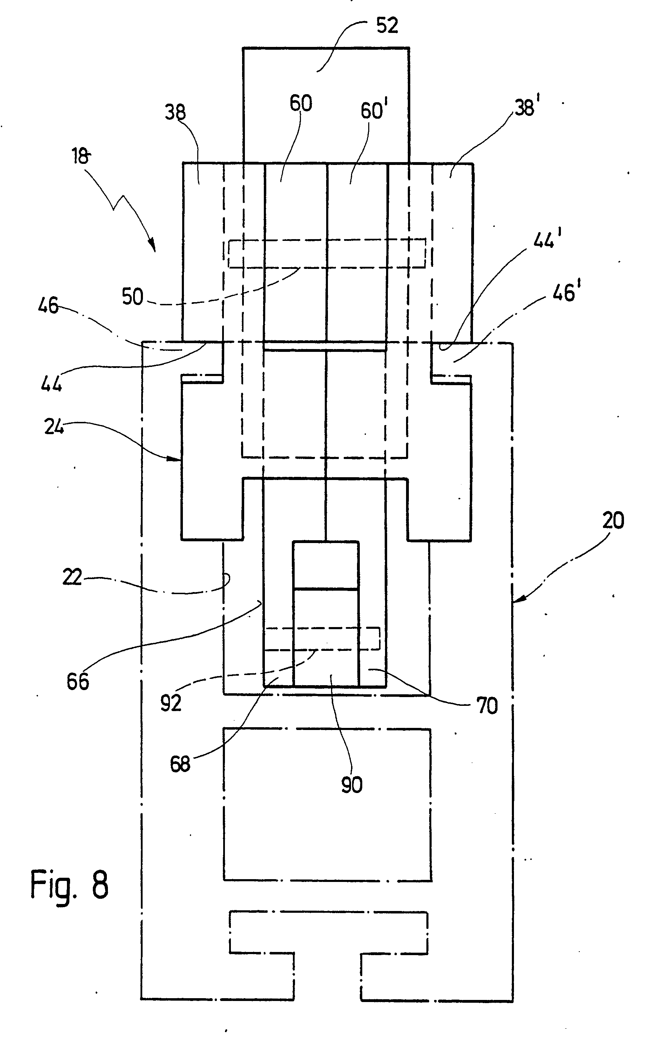

Die Lagerkörper 18 sind, wie Fig. 2 deutlich zeigt, in entsprechenden Trägerschienen 20 hintereinander abstandsfrei angeordnet. Eine Stirnansicht dieser Trägerschienen ist in Fig. 8 strichpunktiert eingezeichnet. Sie weist eine nach oben offene, die Trägerschiene in Längsrichtung durchziehende Längsnut 22 auf, in welche die Lagerkörper 18 mit einem Lagerbock 24 eingeschoben sind. Die Trägerschiene 20 könnte auch mit zwei oder drei zueinander parallel verlaufenden Längsnuten 22 ausgestattet sein. Die Trägerschienen 20 sind hierbei in gleichen seitlichen Abständen voneinander angeordnet (s. Fig. 2), die so gross gehalten sind, dass zwischen diesen bereichsweise Komponenten des Werkstückauflagetisches 16 der Plattenquersäge 12 eingebracht werden konnten. Auf deren Konstruktion wird weiter unten eingegangen.

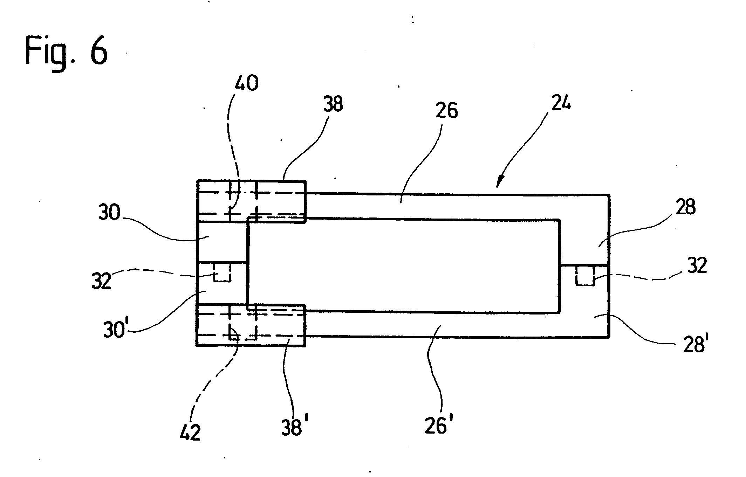

Wie Fig. 6 zeigt, bildet der Lagerbock 24 einen Rahmen, der aus zwei symmetrisch ausgebildeten U-förmigen Rahmenteilstücken gebildet ist, deren über einen U-Steg 26 bzw. 26′ miteinander verbundene U-Schenkel 28, 30 bzw. 28′, 30′ mittels Eingriffsnoppen 32 gegenseitig in Eingriff gebracht und mittels Blindnieten 34 und 36 fest miteinander verbunden sind. Die U-Schenkel 30 bzw. 30′ weisen jeweils eine Lagerlasche 38 bzw. 38′ auf, von denen die eine quer zur Längsnut 22 der Trägerschiene 20 von einer Bohrung 40 durchdrungen ist, der in der Lagerlasche 38′ zur Bohrung 40 koaxial eine Sacklochbohrung 42 zugeordnet ist. An der Basis der Lagerlasche 38 bzw. 38′ ist an den beiden Rahmenteilstücken aussenseitig jeweils eine Längsnut 44 bzw. 44′ vorgesehen, in die ein die Längsnut 22 oben verengender Nutvorsprung 46 bzw. 46′ eingreift.

Im Lagerbock 24 ist ein als Ganzes mit 48 bezeichnetes und um die Achse der Bohrungen 40, 42 verschwenkbares Schwenkglied in Form eines Winkelhebels verschwenkbar gelagert, der aus zwei symmetrischen Hebelhälften gebildet ist, die, in Draufsicht gesehen, einen Lagerrahmen bilden, in welchem mittels einer Lagerachse 50 eine Stützrolle 52 verdrehbar gelagert ist, wobei sich deren Lagerachse 50 quer zur Längsnut 22 erstreckt.

Der Lagerrahmen umfasst zwei Längsrahmenschenkel 54 bzw. 54′, die an ihrem einen Schenkelende jeweils ein Querrahmenschenkelteilstück 56 bzw. 56′ aufweisen, denen am anderen Ende des Längsrahmenschenkels 54 bzw. 54′ ein weiteres Querrahmenschenkelteilstück 58 bzw. 58′ zugeordnet ist, von dem sich in Richtung des Längsrahmenschenkels 54 bzw. 54′ eine Lagerlasche 60 bzw. 60′ wegerstreckt, an die ein sich nach unten erstreckender Hebelarm 62 bzw. 62′ angeformt ist. Beide Hebelarme 62, 62′ sind im Bereich ihres freien Endes an ihrer einander zugekehrten Flachseite bei 64 bzw. 64′ stufenförmig abgesetzt, wodurch bei zusammengesetztem Lagerrahmen die beiden Hebelarme 62, 62′ einen Winkelschenkel 66 bilden, dessen freies Ende, wie Fig. 8 zeigt, gegabelt ist bzw. zwei Gabelschenkel 68 und 70 aufweist. Beide Hälften des Lagerrahmens lassen sich, analog zum Lagerbock 24, mit Hilfe von Eingriffsnoppen 72 und Sacklochbohrungen 74 passend zusammenstecken, wobei sie mittels eines die Querrahmenschenkelteilstücke 56, 56' durchsetzenden Blindniets 76 fest miteinander verbindbar sind.

Die Lagerlaschen 60, 60' sind von zueinander koaxialen zylindrischen Ausnehmungen 78, 78' durchdrungen; ebenso der Gabelschenkel 68 von einer zylindrischen Ausnehmung 80, der im Gabelschenkel 70 ein Sackloch 82 koaxial zugeordnet ist. Zur Lagerung der Stützrolle 52 dient eine den Längsrahmenschenkel 54 durchdringende zylindrische Ausnehmung 84, der im Längsrahmenschenkel 54' z.B. ein Sackloch 86 zur Aufnahme der Lagerachse 50 zugeordnet ist.

Die vorzugsweise symmetrische Teilung von Lagerbock 24 und Schwenkglied 48 bietet eine vorteilhafte Montagemöglichkeit des Lagerkörpers 18. Zunächst ist hierbei die Lagerachse 50 in die Stützrolle 52 einzubringen, wonach die beiden über die Stützrolle 52 überstehenden Endstücke der Lagerachse 50 in die Ausnehmungen 84 und 86 der beiden Längsrahmenschenkel 54 und 54' einzustecken und zugleich die beiden Teilstücke des Winkelhebels 48 zusammenzustecken und mit Hilfe des Blindniets 76 fest miteinander zu verbinden sind. Anschliessend sind die beiden Hälften des Lagerbocks 24 zusammenzustecken und mit Hilfe der Blindniete 34 und 36 miteinander fest zu verbinden, wonach das die Stützrolle 52 tragende Schwenkglied 48 in den Lagerbock 24 einzusetzen und mittels einer Schwenkachse 88 in diesem zu lagern ist. Hierzu ist letztere durch die Bohrung 40 der Lagerlasche 38, durch die Bohrungen 78, 78' der Lagerlaschen 60, 60' des Winkelhebels 48 hindurchzuführen und mit dem Sackloch 42 der Lagerlasche 38' in Eingriff zu bringen ist.

Sind sämtliche, in eine der Trägerschienen 20 einzusetzenden Lagerkörper 18 montiert, ist zwischen die Gabelschenkel 68 und 70 des Winkelhebels 66 ihres Lagerrahmens eine im Querschnitt beispielsweise rechteckförmige Betätigungsstange 90 einzubringen und mit diesem mittels eines Mitnehmerstiftes 92 schwenkbar zu verbinden, der zu diesem Zweck in die zylindrische Ausnehmung 80 und eine die Betätigungsstange 90 durchsetzende Bohrung 94 einzuführen und mit dem Sackloch 82 in Eingriff zu bringen ist.

Sind sämtliche Lagerkörper 18 auf diese Weise mit der Betätigungsstange 90 verbunden, so wird diese samt den Lagerkörpern 18 in die Längsnut 22 der Trägerschiene 20 eingeschoben, wobei schliesslich das Vorderende der Betätigungsstange 90 mit einer Kolbenstange 96 eines vorzugsweise pneumatisch betätigbaren Arbeitszylinders 98 schwenkbeweglich verbunden wird, der seinerseits an einem Widerlager 100 des Werkstückauflagetisches 14 angelenkt ist.

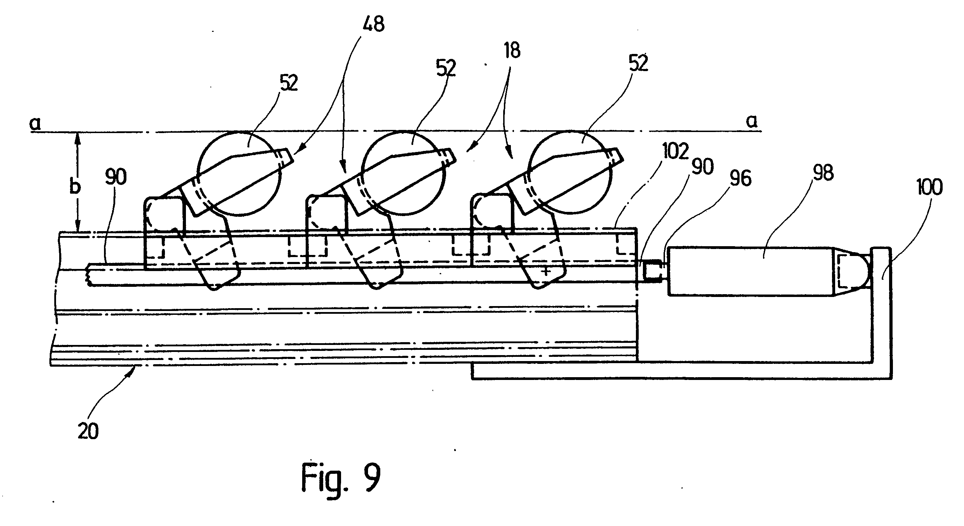

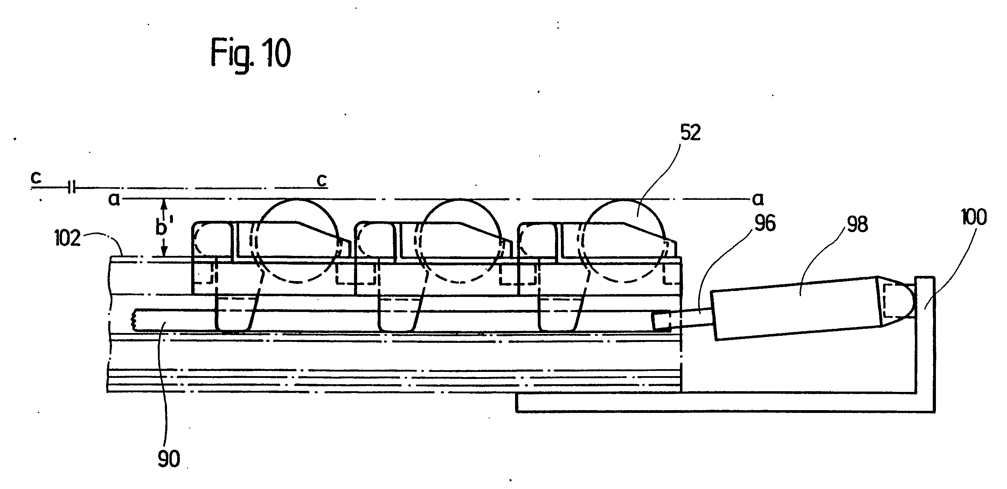

Aus den Fig. 9 und 10 ist ersichtlich, dass sich eine durch die Stützrollen 52 der Lagerkörper 18 definierte Werkstückauflageebene a-a durch entsprechendes Abschwenken der Schwenkglieder 48 der Lagerkörper 18 derart nach unten verlagern lässt, dass sich deren ursprünglicher Abstand b (Fig. 9) zu einem Abstand b' (Fig. 10) verringert. Dies erfolgt durch ein Verschieben der Betätigungsstange 90 gemäss Fig. 9 und 10 nach links. Die Konstruktion könnte alternativ auch so getroffen sein, dass nach Abschwenken der Schwenkglieder 48 kein Teil der Lagerkörper 18 über die Oberseite der Trägerschiene 20 vorsteht.

Wie aus Fig. 2 ersichtlich ist, sind Komponenten des der Plattenquersäge 12 zugeordneten Werkstückauflagetisches 16 zwischen den Trägerschienen 20 des Werkstückauflagetisches 14 angeordnet, wobei diese Komponenten gleichfalls vorzugsweise mit nur jeweils einer Stützrolle 104 ausgestatteten Lagerkörpern 106 ausgerüstet sind. Die konstruktiven Einzelheiten dieser Lagerkörper 106 interessieren im vorliegenden Fall nicht, da sie beliebig ausgebildet sein können. Wesentlich ist nur, dass sich die Lagerachse ihrer Stützrolle 104 parallel zur Trennebene der Plattenquersäge 12 erstreckt und damit zur Lagerachse 50 der Stützrollen 52 des Werkstückauflagetisches 14 senkrecht vorgesehen ist. Die durch die Stützrollen 104 definierte Auflageebene ist in Fig. 1 mit c-c bezeichnet, wobei deutlich wird, dass diese in einem Abstand, unterhalb der durch die Stützrollen 52 des Werkstückauflagetisches 14 in deren hochgeschwenkter Stellung definierten Werkstückauflageebene a-a des Werkstückauflagetisches 14 vorgesehen ist.

In der in Fig. 10 gezeigten, abgeschwenkten Stellung der Stützrollen 52 befindet sich hingegen die Werkstückauflageebene a-a etwas unterhalb der Werkstückauflageebene c-c des Werkstückauflagetisches 16.

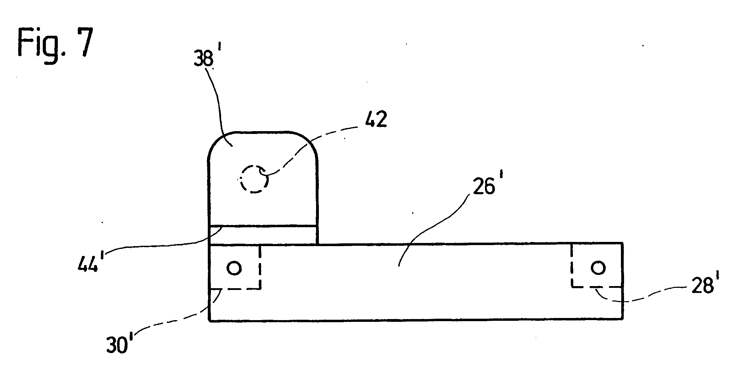

Der Werkstückauflagetisch 16 könnte, analog zum Werkstückauflagetisch 14, auch durch einander parallel zugeordnete, mit entsprechenden Lagerkörpern ausgestattete Trägerschienen gebildet sein, wobei eine mögliche Konstruktion die Fig. 7 der DE-PS 34 00 686 zeigt. Eine Übergabe von an der Plattenlängssäge 10 abgabeseitig anfallenden Plattenteilstücken zur Plattenquersäge 12 zum Queraufteilen erfolgt folgendermassen:

Beim Längsaufteilen von Werkstückplatten in der Plattenlängssäge 10 werden die Stützrollen 52 der Lagerkörper 18 des Werkstückauflagetisches 14 in ihre in den Fig. 1 und 9 angehobene Stellung gesteuert, so dass die anfallenden Plattenteile mittels der nicht näher gezeigten Vorschubeinrichtung über die Stützrollen 104 des Werkstückauflagetisches 16 der Plattenquersäge 12 geschoben und dort an einen nicht gezeigten Seitenanschlag angelegt werden können. Danach werden die Stützrollen 52 der Lagerkörper 18 durch Verschieben der Betätigungsstange 90, gemäss Fig. 10, nach links in ihre abgesenkte Stellung gesteuert, in der sie sich unterhalb der Werkstückauflageebene c-c befinden (Fig. 10). Nunmehr liegen die Plattenteilstücke auf den Stützrollen 104 auf und können zum Queraufteilen schrittweise der Plattenquersäge 12 zuge- führt werden.

## Ansprüche

1. Lagerkörper zur Lagerung einer Stützrolle zum Abstützen und Transportieren plattenförmiger Werkstücke auf einem Auflagetisch, der in eine nach oben offene Längsnut einer Trägerschiene formschlüssig einsetzbar ist und an dem die Stützrolle auf einer quer zur Längsnut angeordneten Achse gelagert und zumindest mit einem Umfangs- teil oberhalb der Trägerschienenoberseite angeord- net ist,
**dadurch gekennzeichnet,**
dass die Stützrolle (52) am Lagerkörper (18) mittels eines in der Trägerschiene (20) verstellbar angeordneten Stellgliedes (90) aus einer Stellung unterhalb eines Tischniveaus (Ebene c-c) in eine Stellung oberhalb dieses Tischniveaus verstellbar ist.

2. Lagerkörper nach Anspruch 1, dadurch gekennzeichnet, dass die Stützrolle (52) an einem am Lagerkörper (18) gelagerten und mit dem Stellglied (90) verbundenen Schwenkglied (48) gelagert ist.

3. Lagerkörper nach Anspruch 1 oder 2, dadurch gekennzeichnet, dass das Schwenkglied (48) ein Winkelhebel ist, dessen einer Hebelarm (54, 54$'$), die Stützrolle (52) tragend, sich insbesondere oberhalb der Trägerschiene (20) in deren Längsrichtung erstreckt und dass dessen anderer Hebelarm (62, 62$'$), sich nach unten erstreckend, am Stellglied (90) angelenkt ist.

4. Lagerkörper nach Anspruch 3, dadurch gekennzeichnet, dass das Stellglied eine in einer Längsnut (22) der Trägerschiene (20) längs verschiebbar angeordnete Betätigungsstange (90) ist.

5. Lagerkörper nach einem der vorhergehenden Ansprüche 2 bis 4, dadurch gekennzeichnet, dass der Lagerkörper (18) einen in Richtung der ihn aufnehmenden Längsnut (22) der Trägerschiene (20) zweigeteilten Rahmen aufweist, zwischen dessen Längsrahmenschenkeln (54 und 54$'$) das die Stützrolle (52) lagernde Schwenkglied (48) verschwenkbar gelagert ist.

6. Lagerkörper nach Anspruch 5, dadurch gekennzeichnet, dass das Schwenkglied (48) einen in Längsrichtung der den Lagerkörper (18) aufnehmenden Längsnut (22) der Trägerschiene (20) geteilten Rahmen aufweist und die Stützrolle (52) mit einer Schwenkachse (50) zwischen dessen Längrahmenschenkeln (54 und 54$'$) gehalten ist.

# Fig. 1

EP 0 382 017 A1

# Fig. 2

EP 0 382 017 A1

Fig. 3

# Fig. 4

EP 0 382 017 A1

Fig. 5

48

52

78'

66

82

EP 0 382 017 A1

EP 0 382 017 A1

Fig. 6

Fig. 7

38'

42

26'

44'

30'

28'

EP 0 382 017 A1

Fig. 8

Fig. 9

EP 0 382 017 A1

Fig. 10

EP 0 382 017 A1

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁹) |
| X | AT - B - 231 346 (WELDED PRODUCTS) * Fig. 5-7 * -- | 1 | B 65 G 13/12 B 65 G 13/00 B 65 G 39/09 |
| X | US - A - 4 205 740 (HAMMOND) * Fig. 5 * -- | 1 | |
| X | WO - A1 - 88/02 344 (HYDRAROLL) * Fig. 2; Seite 2, letzter Absatz * -- | 1 | |
| X | FR - A1 - 2 329 550 (CARTWRIGHT) * Fig. 1,4 * -- | 1 | |
| A | GB - A - 1 124 350 (VON BUSCHE) * Fig. 1 * -- | 1-4 | |
| D,A | DE - A1 - 3 400 686 (JENKER) * Fig. 1 * ---- | 1 | RECHERCHIERTE SACHGEBIETE (Int Cl⁹) B 65 G |

Der vorliegende Recherchenbericht wurde für alle Patentansprüche erstellt

| Recherchenort WIEN | Abschlußdatum der Recherche 04-04-1990 | Prüfer BAUMGARTNER |
|---|---|---|